(19) Europäisches Patentamt
European Patent Office
Office européen des brevets

(11) **EP 2 936 057 B1**

(12) **FASCICULE DE BREVET EUROPEEN**

(45) Date de publication et mention de la délivrance du brevet:
**14.12.2016 Bulletin 2016/50**

(21) Numéro de dépôt: **13815084.2**

(22) Date de dépôt: **12.12.2013**

(51) Int Cl.:
**G01C 19/64** *(2006.01)*

(86) Numéro de dépôt international:
**PCT/FR2013/053059**

(87) Numéro de publication internationale:
**WO 2014/096636 (26.06.2014 Gazette 2014/26)**

(54) **DISPOSITIF DE MESURE INTERFÉROMÉTRIQUE COMPORTANT UN INTERFÉROMÈTRE DE FILTRAGE**

INTERFEROMETRISCHE MESSVORRICHTUNG MIT EINEM FILTERUNGSINTERFEROMETER

INTERFEROMETRIC MEASUREMENT DEVICE COMPRISING A FILTERING INTERFEROMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2012 FR 1262363**

(43) Date de publication de la demande:
**28.10.2015 Bulletin 2015/44**

(73) Titulaire: **IXBLUE**
**78100 Saint-Germain-en-Laye (FR)**

(72) Inventeurs:
• **HONTHAAS, Joachin**
**F-75017 Paris (FR)**
• **LEFEVRE, Hervé**
**F-75007 Paris (FR)**
• **DUCLOUX, Eric**
**F-92500 Rueil Malmaison (FR)**
• **BONNEFOIS, Jean-Jacques**
**91570 Bievres (FR)**

(74) Mandataire: **Jacobacci Coralis Harle**
**14-16, rue Ballu**
**75009 Paris (FR)**

(56) Documents cités:
**EP-A1- 0 911 930**

• **SUNGHWAN SHIN ET AL: "Characterization and Analysis of Relative Intensity Noise in Broadband Optical Sources for Optical Coherence Tomography", IEEE PHOTONICS TECHNOLOGY LETTERS, IEEE SERVICE CENTER, PISCATAWAY, NJ, US, vol. 22, no. 14, 15 juillet 2010 (2010-07-15), pages 1057-1059, XP011309336, ISSN: 1041-1135**
• **KEVIN M. KILLIAN ET AL: "<title>High-performance fiber optic gyroscope with noise reduction</title>", PROCEEDINGS OF SPIE, vol. 2292, 1 novembre 1994 (1994-11-01), pages 255-263, XP055075683, ISSN: 0277-786X, DOI: 10.1117/12.191838**
• **LEFEVRE H C: "FUNDAMENTALS OF THE INTERFEROMETRIC FIBER-OPTIC GYROSCOPE", OPTICAL REVIEW, SPRINGER VERLAG, TOKYO, JP, vol. 4, no. 1A, 1 janvier 1997 (1997-01-01), pages 20-27, XP009030920, ISSN: 1340-6000**

**Description**

La présente invention concerne de manière générale le domaine de la métrologie optique par méthode interférométrique.

Elle concerne plus particulièrement un dispositif de mesure interférométrique comportant un interféromètre de filtrage permettant de réduire le bruit d'intensité en excès de la source lumineuse utilisée dans ce dispositif de mesure interférométrique.

L'invention trouve une application particulièrement avantageuse dans la réalisation d'un gyromètre comprenant un tel dispositif de mesure interférométrique et dans la réalisation d'une centrale d'attitude ou de navigation inertielle utilisant un tel gyromètre.

De manière classique, un dispositif de mesure interférométrique peut comprendre :

- une source lumineuse,
- un interféromètre de mesure recevant, en entrée, un signal lumineux de puissance lumineuse d'entrée $P_{in}$ et délivrant, en sortie, un signal lumineux modulé de puissance lumineuse de sortie $P_{out}$, ledit signal lumineux modulé étant modulé à une fréquence de modulation $f_m$, dépendant d'un paramètre physique à mesurer et étant proportionnel à la puissance lumineuse d'entrée $P_{in}$, et
- un détecteur de rayonnement optique, recevant ledit signal lumineux modulé sortant dudit interféromètre de mesure et délivrant un signal électrique modulé proportionnel à ladite puissance lumineuse de sortie $P_{out}$.

Par un traitement du signal électrique modulé délivré par le détecteur de rayonnement optique, en particulier une démodulation à la fréquence de modulation $f_m$, on peut alors déduire ledit paramètre physique.

Afin de s'affranchir des effets de cohérence temporelle de la source, il est connu que la source lumineuse peut être une source lumineuse d'émission spontanée à spectre large.

On considérera ici qu'une source lumineuse est à « émission spontanée » lorsque le spectre de cette source comprend un continuum de longueurs d'onde.

Comme exemples d'une telle source, on peut citer : le soleil, une source thermique rayonnante, une diode super-luminescente à semi-conducteur, dite aussi super-radiante, ou une source super-fluorescente à fibre amplificatrice.

Ces sources super-luminescentes, super-radiantes ou super-fluorescentes sont en fait des sources d'émission spontanée dont cette émission spontanée est amplifiée par une émission stimulée qui conserve les caractéristiques spectrales de l'émission spontanée d'origine. Le terme général pour ce type de sources est source ASE (pour « *Amplified by stimulated émission Spontaneous Emission* » en anglais).

À la différence d'une source ASE, une source laser n'est pas une source lumineuse d'émission spontanée.

On considérera par ailleurs qu'une source lumineuse est à spectre large lorsque le rapport entre la pleine largeur à mi-hauteur ou FWHM (pour « *Full Width at Half Maximum* » en anglais) de son spectre continu et sa longueur d'onde moyenne est supérieur à $10^{-7}$.

Par exemple, une source lumineuse à fibre dopée erbium (symbole chimique Er) filtrée au moyen d'un filtre de Bragg présente typiquement un spectre pseudo-gaussien centrée autour d'une longueur d'onde de 1530 nm à 1560 nm et ayant une pleine largeur à mi-hauteur (FWHM) d'environ 5 à 20 nanomètres (nm) ; cette source lumineuse est donc une source large, le rapport entre sa pleine largeur à mi-hauteur et sa longueur d'onde moyenne étant égale à environ 3 à $12 \times 10^{-3}$.

Une source lumineuse d'émission spontanée à spectre large émet un signal lumineux dont la puissance lumineuse est sujette à différentes sources de bruit.

Est connu tout d'abord le bruit photonique $B_{ph}$ ou « bruit de grenaille » (« *shot noise* » en anglais) qui est la limite théorique de toute source lumineuse. Le bruit photonique est un bruit blanc dont la quantité est directement reliée à la puissance lumineuse de la source lumineuse.

Plus précisément, le bruit photonique varie, en absolu, comme la racine carrée de la puissance lumineuse et donc, en relatif, comme l'inverse de la racine carrée de la puissance lumineuse.

Par exemple, un signal lumineux à 1550 nm de 50 microwatt ($\mu$W) de puissance présente un bruit photonique relatif $B_{ph}$ de $10^{-7}/Hz^{1/2}$ en écart type, c'est-à-dire de $10^{-14}/Hz$ en puissance de bruit, soit encore -140 décibels/Hz (-140 dB/Hz).

Pour un signal lumineux de puissance 500 $\mu$W, donc dix fois supérieure, le bruit photonique relatif $B_{ph}$ est de -150 dB/Hz, soit 10 dB/Hz en dessous en puissance de bruit, soit un facteur 10 en puissance de bruit et un facteur racine carrée de 10 ($10^{1/2} \approx 3,16$) en écart-type.

Est également connu le bruit relatif d'intensité en excès (« *excess Relative Intensity Noise* » en anglais, ou « *excess RIN* »), qui est aussi un bruit blanc mais pour des fréquences inférieures à la pleine largeur à mi-hauteur du spectre en fréquence optique, FWHM(f), soit 1 à 4 térahertz (THz) pour une FWHM (en longueur d'onde) de 5 à 20 nm autour d'une longueur d'onde de 1550 nm.

Le bruit relatif d'intensité en excès $B_{RIN}$ est, en puissance de bruit, approximativement égal à l'inverse de la pleine largeur à mi-hauteur du spectre en fréquence optique FWHM(f) du signal lumineux à spectre large, c'est-à-dire BRIN = 1/FWHM(f).

En effet, il est connu que le bruit d'intensité en excès provient des battements de puissance entre l'ensemble des différentes composantes fréquentielles du spectre large continu du signal lumineux qui interfèrent entre elles, ces composantes ayant entre elles des fréquences différentes et une phase aléatoire.

Le spectre du bruit relatif d'intensité en excès est donc le résultat d'une loi d'autocorrélation : il commence à la fréquence nulle et présente une largeur sensiblement égale à la largeur du spectre optique de la source lumineuse qui, lui, est en revanche centré autour d'une fréquence très haute, environ 200 THz pour une longueur d'onde de 1550 nm.

Ainsi, le même signal lumineux de 50 $\mu$W de puissance qui présenterait une pleine largeur à mi-hauteur en fréquence optique FWHM(f) de 1THz aurait, à basse fréquence, un bruit relatif d'intensité en excès BRIN de-120dB/Hz en puissance de bruit, soit 20 dB/Hz au-dessus de la puissance de bruit photonique relatif $B_{ph}$ de -140 dB/Hz.

Un tel signal à émission spontanée à spectre large présente un bruit relatif d'intensité en excès qui est la source prépondérante de bruit.

Un dispositif de mesure interférométrique qui utiliserait un tel signal lumineux sans précaution particulière présente ainsi des performances médiocres, limitant par la même la précision de la mesure du paramètre physique à mesurer.

L'état de l'art présente certains moyens de réduction du bruit, tels que la soustraction du bruit dans "High-performance fiber optic gyroscope with noise réduction" par Kevin M. Killian et al, la surmodulation dans le document EP0911930 et des amplificateurs optiques dans "Characterization and Analysis of Relative Intensity Noise in Broadband Optical Sources for Optical Coherence Tomography",par Sunghwan Shin et al.

Afin de remédier à l'inconvénient précité de l'état de la technique, la présente invention propose un dispositif de mesure interférométrique dans lequel le signal lumineux modulé portant l'information sur le paramètre à mesurer présente un bruit relatif d'intensité en excès réduit.

À cet effet, l'invention concerne un dispositif de mesure interférométrique tel que défini par la revendication 1.

Ainsi, grâce à l'utilisation d'un interféromètre de filtrage conforme à l'invention, le spectre optique de la source lumineuse d'émission spontanée, qui est donc large, va subir une transformation lors de sa transmission par l'interféromètre de filtrage. La puissance lumineuse en sortie de l'interféromètre de filtrage présente une modulation périodique en fonction de la fréquence de sorte que le spectre transmis est un spectre « cannelé » avec des pics et des creux, correspondant respectivement à des maxima et à des minima pour la transmission lumineuse de l'interféromètre de filtrage.

Ce phénomène est classiquement appelé interférométrie en lumière blanche.

Dans la suite de la description, on appellera « cannelures » les pics du spectre cannelé transmis par l'interféromètre de filtrage et correspondant à des maxima de transmission lumineuse par l'interféromètre de filtrage.

De manière connue, l'interféromètre de filtrage présente un intervalle spectral libre ISL, exprimé en fréquence (unité : hertz), qui est fonction de ses caractéristiques optiques et physiques.

Cet intervalle spectral libre ISL, exprimé en fréquence, est :

- l'inverse de la différence de temps de propagation entre les deux bras dans le cas d'un interféromètre de filtrage déséquilibré à deux ondes, par exemple un interféromètre de Mach-Zehnder ou de Michelson et,
- l'inverse du temps de propagation sur un passage dans le résonateur dans le cas d'un interféromètre résonant à ondes multiples, par exemple un interféromètre de Fabry-Perot ou un résonateur en anneau.

Dans le cas d'un interféromètre de filtrage à fibre optique en silice, cet intervalle spectral libre ISL vaut approximativement 200 kHz pour une longueur de déséquilibre L entre les bras de 1 kilomètre, avec une loi multiplicative du type : ISL x L = 200 kHz.km.

Fréquentiellement, les cannelures du spectre optique du signal lumineux filtré sortant de l'interféromètre de filtrage sont centrées autour de fréquences égales à un multiple entier de l'intervalle spectral libre ISL, soit k.ISL, k étant un entier naturel, nul ou non (k = 0, 1, 2,..., *etc*).

Deux cannelures successives, de fréquences $f_1$ = k.ISL et $f_2$ = (k+1).ISL sont séparées en fréquence d'une distance $\delta f$ = $|f_2\text{-}f_1|$ égale à l'intervalle spectral libre ISL, car

$$\delta f = |f_2\text{-}f_1| = (k+1).ISL - k.ISL = ISL.$$

Entre ces deux cannelures, se trouve un creux de transmission qui est à égale distance des deux cannelures, et qui est centré sur une fréquence optique médiane égale à

$$(f_1+f_2)/2 = [k.ISL+(k+1).ISL]/2 = (2k+1) \, ISL/2.$$

La largeur de chaque cannelure est d'autant plus faible (i.e. les cannelures sont d'autant plus fines) que la finesse F de l'interféromètre de filtrage est grande. Inversement, l'intervalle sur lequel s'étend le creux de transmission est d'autant plus large que la finesse F de l'interféromètre de filtrage est grande.

Maintenant, la même loi d'autocorrélation s'applique pour déterminer le bruit relatif d'intensité en excès $B_{RIN}$, et la répartition fréquentielle de ce dernier reproduit à partir de la fréquence zéro les cannelures et la finesse du spectre optique très haute fréquence.

Le bruit relatif d'intensité en excès BRIN est ainsi augmenté aux fréquences égales à 2k.ISL (et à la fréquence nulle en particulier) par rapport au bruit relatif d'intensité en excès d'origine, avant l'interféromètre de filtrage.

Le bruit relatif d'intensité en excès n'est donc plus un bruit blanc mais présente un peigne de cannelures périodiques similaire à celui du spectre optique du signal lumineux filtré, ce peigne partant néanmoins, comme déjà vu précédemment, de la fréquence zéro, et ce jusqu'à la fréquence maximale du bruit d'intensité du signal lumineux émis par la source lumineuse d'origine, c'est-à-dire jusqu'à la pleine largeur à mi-hauteur en fréquence optique FWHM(f) du spectre optique du signal lumineux de la source lumineuse.

Il a été analysé dans le cadre de cette invention qu'en revanche le bruit relatif d'intensité en excès $B_{RIN}$ est réduit, grâce à l'utilisation de l'interféromètre de filtrage, dans les creux entre les cannelures du bruit, soit autour des fréquences optimales $f_{optim}$ égales à (2k-1).ISL/2.

En ajustant la période des cannelures, donc l'intervalle spectral libre ISL, grâce au déséquilibre temporel de l'interféromètre de filtrage, il est alors possible de faire coïncider une zone de réduction du bruit d'intensité en excès d'origine autour des fréquences optimales $f_{optim}$ = (2k+1).ISL/2 avec la fréquence de modulation $f_m$ de l'interféromètre de mesure.

On considérera ici que les zones de réduction s'étendent sur un intervalle de fréquences de largeur Δf qui est égale à [0,9-(3/2F)] ISL, et ce autour des fréquences optimales $f_{optim}$ qui sont égales à (2k+1).ISL/2.

La répartition fréquentielle du bruit relatif d'intensité en excès $B_{RIN}$ du signal lumineux est alors modifié, ou « sculpté », par l'interféromètre de filtrage. Le bruit relatif d'intensité en excès est concentré sur le peigne de cannelures périodiques et réduit dans les creux de ce peigne.

En ajustant l'intervalle spectral libre ISL de l'interféromètre de filtrage, le peigne de bruit peut être rendu non gênant pour la mesure du paramètre physique à mesurer à la fréquence de modulation $f_m$ du signal lumineux modulé qui sort de l'interféromètre de mesure et qui porte l'information sur la mesure de ce paramètre physique.

De manière avantageuse, en sélectionnant l'intervalle spectral libre ISL et la finesse F de l'interféromètre de filtrage pour que la zone de réduction du bruit, centrée autour de la fréquence optimale $f_{optim}$ = (2k+1) ISL/2 et présentant une largeur Δf égale à [0,9-(3/2F)] ISL, comprenne la fréquence de modulation $f_m$ de l'interféromètre de mesure, on réduit alors le bruit relatif d'intensité en excès du signal lumineux modulé à la fréquence $f_m$ et on améliore ainsi la précision de mesure du paramètre physique à mesurer au moyen de l'interféromètre de mesure.

Par ailleurs, d'autres caractéristiques avantageuses et non limitatives du dispositif selon l'invention sont définies dans les revendications 2 à 11.

La présente invention trouve une application particulièrement avantageuse dans la réalisation d'un gyromètre à fibre optique comportant un dispositif de mesure interférométrique dont l'interféromètre de mesure est un interféromètre en anneau de $S_{AGNAC}$ à fibre optique adapté à mesurer la vitesse de rotation autour d'un axe de rotation perpendiculaire au plan de l'anneau de $S_{AGNAC}$.

Ainsi, la présente invention concerne également un tel gyromètre à fibre optique et une centrale d'attitude ou de navigation inertielle comprenant un tel gyromètre.

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente une vue schématique d'un dispositif de mesure interférométrique selon un premier mode de réalisation ;
- la figure 2 représente une vue schématique d'un montage optique permettant de mesurer les performances d'un interféromètre de filtrage entrant dans la construction du dispositif de mesure interférométrique de la figure 1 ;
- la figure 3 représente une vue schématique d'un interféromètre de filtrage à deux ondes de type Mach-Zehnder entrant dans la construction du dispositif de mesure interférométrique selon le premier mode de réalisation ;
- la figure 4 représente une vue schématique d'un interféromètre de filtrage à ondes multiples de type résonateur en anneau entrant dans la construction du dispositif de mesure interférométrique selon le premier mode de réalisation ;
- la figure 5 représente, en ordonnée linéaire, les courbes de transmission normalisée en fréquences de l'interféromètre de filtrage selon les deux variantes des figures 3 et 4 ;

- la figure 6 représente, en ordonnée logarithmique, les courbes de variation en fréquence de la densité de puissance de bruit relatif d'intensité en excès obtenues pour l'interféromètre de filtrage selon les variantes des figures 3 et 4 ;
- la figure 7 représente une vue schématique d'un dispositif de mesure interférométrique selon un deuxième mode de réalisation ;
- la figure 8 représente une vue schématique d'un montage optique permettant de mesurer les performances d'un interféromètre de filtrage entrant dans la construction du dispositif de mesure interférométrique de la figure 7 ;
- la figure 9 représente une vue schématique d'un interféromètre de filtrage à deux ondes de type Mach-Zehnder en configuration double passage entrant dans la construction du dispositif de mesure interférométrique selon le deuxième mode de réalisation ;
- la figure 10 représente une vue schématique d'un interféromètre de filtrage comprenant un résonateur en anneau à fibre optique en configuration double passage entrant dans la construction du dispositif de mesure interférométrique selon le deuxième mode de réalisation ;
- la figure 11 représente, en ordonnée logarithmique, les courbes de variation en fréquence de la densité de puissance de bruit relatif d'intensité en excès obtenues pour l'interféromètre de filtrage selon les variantes des figures 9 et 10.

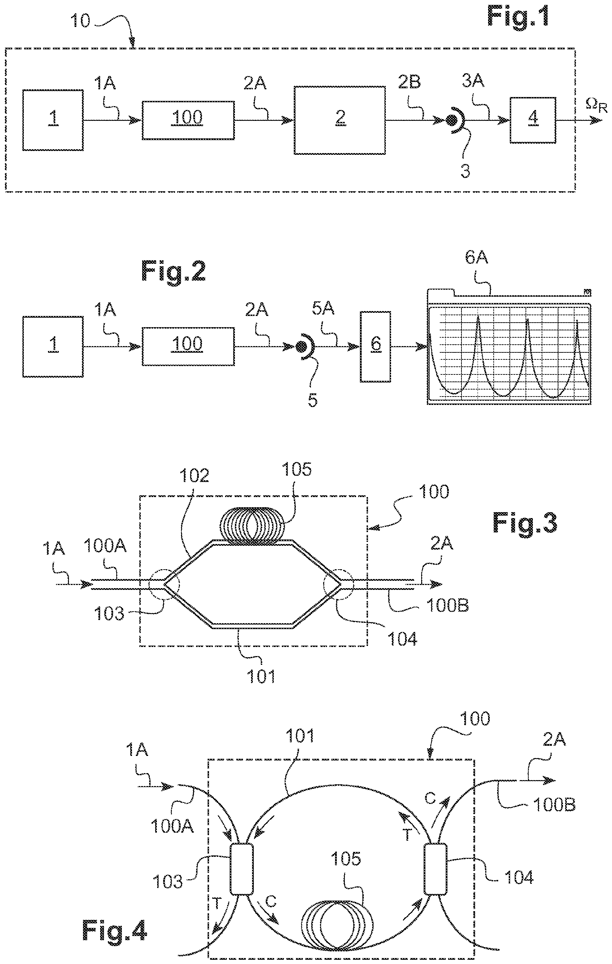

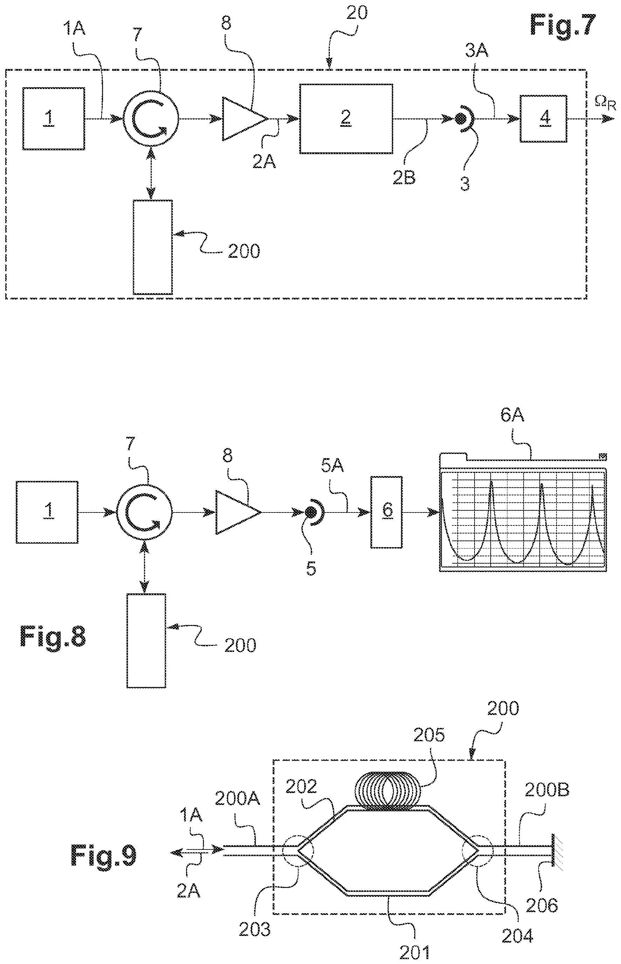

On a représenté sur les figures 1 et 7 deux vues schématiques représentant un dispositif de mesure interférométrique selon deux modes de réalisation de l'invention.

Dans ces deux modes de réalisation, le dispositif de mesure interférométrique 10 ; 20 comporte une source lumineuse 1, un interféromètre de mesure 2 et un détecteur de rayonnement optique 3.

La source lumineuse 1 est ici une source lumineuse d'émission spontanée à spectre large. Il s'agit par exemple d'une source lumineuse ASE à fibre optique dopée avec une terre rare qui est l'erbium (symbole chimique : Er) telle que celles utilisées dans le domaine des télécommunications optiques.

Cette source lumineuse 1 peut être filtrée au moyen d'un filtre de Bragg (non représenté) si bien qu'elle présente un spectre optique de forme sensiblement gaussienne, qui est centré autour d'une longueur d'onde moyenne $\lambda_0$ de 1530 nm, soit 196 THz en fréquence, et qui a une pleine largeur à mi-hauteur FWHM de 6,5 nm, soit 833 GHz, exprimée en fréquence.

Cette source lumineuse 1 est donc une source lumineuse à spectre large puisque le rapport entre sa pleine largeur à mi-hauteur FWHM et sa longueur d'onde moyenne $\lambda_0$ est égal à 4,2 x $10^{-3}$, supérieure à $10^{-7}$.

Cette source lumineuse 1 émet un signal lumineux source 1A entaché d'un bruit relatif d'intensité en excès BRIN dont la densité spectrale de puissance de bruit est égale à 1/FWHM soit 1,2 x $10^{-12}$/Hz, soit -119 dB/Hz.

La densité spectrale de puissance de bruit photonique est constante et indépendante de la fréquence, le bruit photonique étant connu pour être un bruit blanc.

Comme évoqué précédemment, il est connu que le bruit d'intensité en excès n'est pas rigoureusement un bruit blanc. Néanmoins, pour la source lumineuse 1 qui présente un spectre optique gaussien de pleine largeur à mi-hauteur FWHM = 6,5 nm autour de la longueur d'onde moyenne $\lambda_0$ = 1530 nm, la densité spectrale de puissance du bruit relatif d'intensité en excès peut être considérée comme constante en dessous d'une fréquence égale à la pleine largeur à mi-hauteur en fréquence optique FWHM(f) soit 833 GHz.

En sortie de l'interféromètre de mesure 2, le signal lumineux modulé 2B est atténué mais, sans interféromètre de filtrage 100 ; 200, resterait entaché du même bruit relatif d'intensité en excès de -119 dB/Hz que celui de la source lumineuse 1. Avec une puissance de sortie de 50 μW, le bruit photonique relatif $B_{ph}$ serait égal à $10^{-7}$/Hz$^{1/2}$, soit -140 dB/Hz pour la densité spectrale de puissance de bruit photonique relatif.

Ainsi, pour une bande de fréquence comprise entre 0 et 100 MHz, par exemple, la densité de puissance de bruit relatif d'intensité en excès BRIN est très supérieure à la densité de puissance de bruit photonique relatif, l'écart étant aussi élevé que 21 dB/Hz.

L'interféromètre de mesure 2 du dispositif de mesure interférométrique 10 ; 20 dans les deux modes de réalisation de l'invention comprend ici un interféromètre en anneau de $S_{AGNAC}$ à fibre optique.

L'interféromètre de mesure 2 est destiné à mesurer un paramètre physique à mesurer.

Ici, ce paramètre physique à mesurer est la composante $\Omega_R$ de la vitesse de rotation de l'interféromètre de mesure 2, suivant un axe de rotation perpendiculaire au plan de l'anneau de l'interféromètre de SAGNAC.

De manière connue (voir notamment H. Lefèvre, « The Fiber-Optic Gyroscope », Artech House, 1993), cet interféromètre en anneau de SAGNAC comporte une bobine de fibre optique, de préférence monomode et à conservation de polarisation, un coupleur optique et un coupleur en Y combiné à une paire de modulateurs de phase (éléments non représentés).

La bobine de fibre optique est ici une bobine de fibre monomode de longueur 1 kilomètre de sorte que l'interféromètre en anneau de SAGNAC présente une fréquence propre $f_p$ = 103,45 kHz.

L'interféromètre de mesure 2 reçoit en entrée, un signal lumineux filtré 2A de puissance lumineuse d'entrée $P_{in}$ et délivre, en sortie, un signal lumineux modulé 2B de puissance lumineuse de sortie $P_{out}$, qui est proportionnelle à la puissance d'entrée $P_{in}$ et dépend du paramètre à mesurer $\Omega_R$.

La modulation du signal lumineux modulé 2B est réalisée grâce à la paire de modulateurs de phase de l'interféromètre de mesure 2. La modulation est rendue souhaitable afin d'améliorer le rapport signal à bruit de la mesure effectuée par l'interféromètre de mesure 2.

Le signal lumineux modulé 2B est ainsi modulé à une fréquence de modulation $f_m$.

De manière avantageuse, il est connu que cette fréquence de modulation $f_m$ peut être un multiple impair de la fréquence propre fp de l'interféromètre en anneau de $S_{AGNAC}$.

Dans la suite, on considérera que la fréquence de modulation $f_m$ du signal lumineux modulé 2B est égale à la fréquence propre $f_p$ de l'interféromètre, soit : $f_m$ = fp = 103,45 kHz pour une bobine de fibre optique de 1 km.

Le dispositif de mesure interférométrique 10 ; 20 comporte donc également un détecteur de rayonnement optique 3 qui est sensible à et reçoit le signal lumineux modulé 2B sortant de l'interféromètre de mesure 2.

Le détecteur de rayonnement optique 3 comprend ici une photodiode PIN à semi-conducteur.

Le détecteur de rayonnement optique 3 délivre un signal électrique modulé 3A qui est un signal représentatif la puissance lumineuse de sortie $P_{out}$.

Le signal lumineux modulé 2B étant un signal modulé, le signal électrique modulé 3A est également modulé, à la même fréquence de modulation $f_m = f_p$ =103,45 kHz.

On notera qu'une telle fréquence de modulation $f_m$ est une fréquence relativement faible d'un point de vue électronique, de sorte que la photodiode 3 suit sans difficulté le signal lumineux modulé 2B.

Dans les deux modes de réalisation de l'invention, représentés sur les figures 1 et 7, le dispositif de mesure interférométrique 10 ;20 comporte également des moyens de traitement du signal 4 qui exploitent, par démodulation, le signal électrique modulé 3A délivré par le détecteur de rayonnement optique 3 afin de déterminer la composante $\Omega_R$ de la vitesse de rotation de l'interféromètre de mesure 2.

Afin de réduire le bruit d'intensité en excès de la source lumineuse 1 du dispositif de mesure interférométrique 10 ; 20, il est prévu également un interféromètre de filtrage 100, 200 destiné à canneler le spectre optique du signal lumineux source 1A.

De manière indifférente, cet interféromètre de filtrage 100, 200 peut être placé soit entre la source lumineuse 1 et l'interféromètre de mesure 2, soit entre l'interféromètre de mesure 2 et le détecteur de rayonnement optique 3.

Par souci de clarté, la description développée ci-après fait uniquement référence à la première alternative.

Ainsi, dans les deux modes de réalisation de l'invention, représentés sur les figures 1 et 7, l'interféromètre de filtrage 100 ; 200 est ici placé entre la source lumineuse 1 et l'interféromètre de mesure 2, de sorte que l'interféromètre de filtrage 100 ; 200 reçoit, en entrée, le signal lumineux source 1A et délivre, en sortie, le signal lumineux filtré 2A.

Dans les deux modes de réalisation du dispositif de mesure interférométrique 10 ; 20, représentés sur les figures 1 et 7, l'interféromètre de filtrage 100; 200 comprend un interféromètre à fibre optique (voir figures 3,4, 9, et 10).

Dans cette configuration, il est prévu que de manière avantageuse, la longueur de la fibre optique de l'interféromètre de filtrage 100, 200 est légèrement supérieure, de préférence entre 2% et 5% plus longue, à la longueur de la fibre optique de l'interféromètre de mesure 2, lorsque celui-ci comprend un interféromètre en anneau de $S_{AGNAC}$.

En utilisant une fibre optique plus longue pour l'interféromètre de filtrage 100 ; 200, on s'affranchit alors de signaux parasites sur le signal lumineux filtré 2A provenant de la rétrodiffusion dans la fibre optique de l'interféromètre de mesure 2.

En effet, du point de vue de la cohérence, la source lumineuse 1 émet un train d'onde de temps de cohérence $\tau_c$ égal à l'inverse de la pleine largeur à mi-hauteur FWHM du spectre en fréquence optique ($\tau_c$ = 1/FWHM), c'est-à-dire que le temps de cohérence $\tau_c$ est de l'ordre d'une picoseconde (1 ps) pour une pleine largeur à mi-hauteur FWHM de 1 THz. Après l'interféromètre de filtrage 100; 200, ce train d'onde ressort en une série de trains d'onde cohérents espacés du temps de propagation dans l'interféromètre de filtrage 100 ; 200. Si ce temps de propagation est supérieur au temps de propagation dans l'interféromètre de mesure 2, un train d'onde de la série rentrera après toute rétrodiffusion du train d'onde précédent, évitant ainsi des problèmes de bruit de cohérence.

Afin d'évaluer les performances de l'interféromètre de filtrage 100 ; 200, on utilise des moyens d'analyse qui comprend, d'une part, un photo-détecteur 5 et, d'autre part, un analyseur de spectre électrique 6.

Le photo-détecteur 5 délivre un signal électrique 5A à l'analyseur de spectre électrique 6, ce signal électrique 5A présentant un bruit électrique, dont la distribution spectrale de puissance est directement reliée (linéairement dans le cas d'un photo-détecteur 5 utilisé dans sa zone de linéarité) à la densité spectrale de puissance de bruit du signal lumineux filtré 2A.

L'analyseur de spectre électrique 6 délivre alors une courbe 6A représentative de la valeur de la densité de puissance de bruit d'intensité en excès en fonction de la fréquence. Ce résultat est exprimé en dB.Volt (symbole : dB.V).

En d'autres termes, la densité de puissance de bruit électrique mesuré par l'analyseur de spectre 6 à une fréquence électrique $f_{elec}$ (ordre de grandeur de $f_{elec}$ : entre 0 et 10 MHz) est la moyenne quadratique des battements entre toutes les composantes du signal lumineux filtré 2A respectivement aux fréquences optiques $f_{opt}$ (ordre de grandeur de $f_{opt}$ : autour de 200 THz) et $f_{opt}+f_{elec}$ du spectre optique du signal lumineux filtré 2A.

Premier mode de réalisation

Dans un premier mode de réalisation de l'invention, représenté sur la figure 1, l'interféromètre de filtrage 100 est configuré en interféromètre de type simple passage.

Dans une première variante, représentée sur la figure 3, l'interféromètre de filtrage 100 est un interféromètre à deux ondes.

Plus précisément, selon cette première variante du premier mode de réalisation, l'interféromètre de filtrage 100 est un interféromètre de type Mach-Zehnder.

Le signal lumineux source 1A est injecté dans l'interféromètre de filtrage 100 au moyen d'une fibre optique couplée sur le bras d'entrée 100A de l'interféromètre de Mach-Zehnder.

Le signal lumineux source 1A, de puissance $P_0$, est alors divisé en deux signaux lumineux au moyen d'un coupleur d'entrée en Y 103 qui est ici conçu de telle sorte que les deux signaux lumineux divisés correspondants soient d'égale puissance $P_0/2$.

Les deux signaux lumineux divisés se propagent alors dans les deux guides optiques 101, 102 pour se recombiner ensuite au niveau d'un coupleur de sortie en Y 104, les deux signaux lumineux divisés se superposant et interférant ensemble pour former le signal lumineux filtré 2A transmis sur le bras de sortie 100B puis couplé dans une fibre optique pour être conduit vers le photo-détecteur 5 fibre afin de mesurer la puissance lumineuse du signal lumineux filtré 2A.

L'interféromètre de filtrage 100 est déséquilibré, c'est-à-dire qu'à la sortie de l'interféromètre de filtrage 100, le signal lumineux qui est passé dans le premier guide optique 101 et le signal lumineux qui est passé dans le deuxième guide optique 102 sont déphasés l'un par rapport à l'autre d'un déphasage $\Delta\phi$ qui est non nul.

Pour cela, l'interféromètre de filtrage 100 comporte sur le trajet du second signal lumineux une bobine de fibre optique 105 de longueur optique $\Delta L_{opt}$. Par définition, la longueur optique $\Delta L_{opt}$ est le produit de la longueur géométrique (en mètres) de la bobine de fibre optique 105 par l'indice optique de celle-ci, qui est, pour le domaine de longueurs d'onde de la source lumineuse 1, dans le cas d'une fibre optique de silice, égal à environ 1,45. Ainsi, la longueur optique $\Delta L_{opt}$ est égale ici à $1,45.10^3$ m, permettant d'introduire une différence de phase $\Delta\phi = (2\pi/c).f_{opt} \times \Delta L_{opt}$ ($c \approx 3 \times 10^8$ m.s$^{-1}$ étant la vitesse de la lumière) entre les deux bras de l'interféromètre de Mach-Zehnder.

Le signal lumineux filtré 2A en sortie de l'interféromètre de filtrage 100 présente alors une puissance lumineuse d'entrée $P_{in} = P_0 \cos^2(\Delta\phi/2) = P_0 \cos^2(\pi.f_{opt}.\Delta L_{opt}/c)$,

L'interféromètre de filtrage 100 présente donc une réponse, égale au rapport $P_{in}/P_0$ entre la puissance lumineuse d'entrée Pin et la puissance lumineuse source $P_0$, qui est périodique en fonction de la fréquence optique $f_{opt}$ du signal lumineux d'entrée 1A.

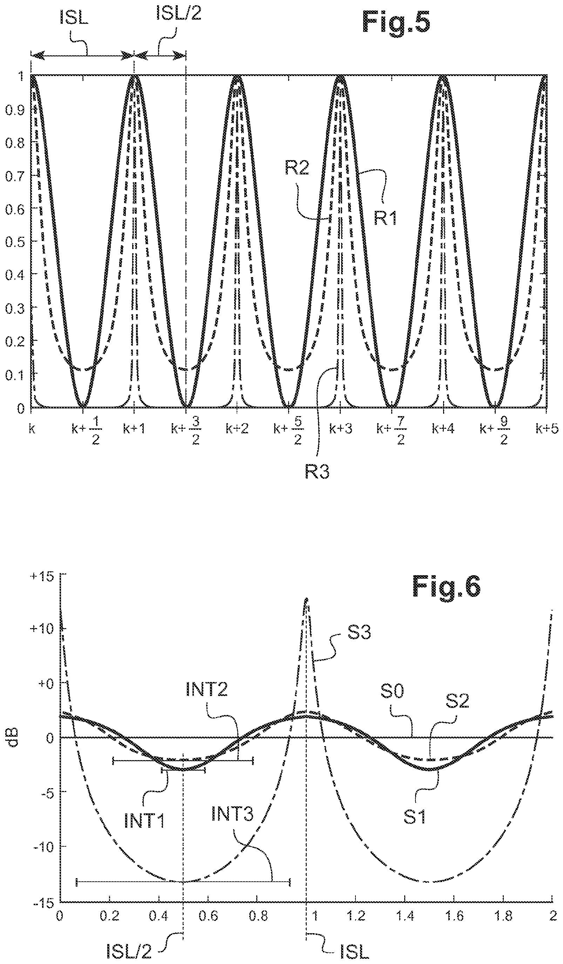

On a représenté sur la figure 5 les fonctions de réponse de l'interféromètre de filtrage 100 dans le premier mode de réalisation où l'interféromètre de filtrage 100 est un interféromètre configuré en simple passage.

La courbe R1 de la figure 5 correspond à la fonction de réponse de l'interféromètre de filtrage 100 selon la première variante où l'interféromètre de filtrage 100 est un interféromètre de Mach-Zehnder, donc un interféromètre à deux ondes.

On retrouve, sur la figure 5, que, de manière connue, la fonction de réponse d'un interféromètre de Mach-Zehnder déséquilibré est en cosinus carré et donc périodique, la période étant appelée l'intervalle spectral libre ISL.

On a d'ailleurs reporté, sur l'axe des abscisses de la figure 5 la fréquence optique réduite $f_{opt}$/ISL à partir de la valeur k jusqu'à k+5. Cette représentation permettra de comparer les différentes courbes de réponses R1, R2, R3 de la figure 5.

L'intervalle spectral libre ISL de l'interféromètre de filtrage 100 dans cette première variante du premier mode de réalisation du dispositif de mesure interférométrique 10 est ici égal à $c/\Delta L_{opt}$= 206,9 kHz.

Comme la fréquence optique moyenne $f_0$ de la source lumineuse 1 est beaucoup plus élevée que l'intervalle spectral libre ISL, puisqu'elle est égale à $f_0 = c/\lambda_0 = 196$ THz, la valeur k est ici de l'ordre de $10^9$.

La transmission lumineuse, et donc la réponse, est maximale et égale à 1 lorsque la différence de phase $\Delta\phi$ est égale à $2 k.\pi$, k étant un entier naturel, et la transmission lumineuse, et aussi la réponse, est minimale lorsque la différence de phase $\Delta\phi$ est égale à $(2k'+1).\pi$, k' étant également un entier naturel.

Les cannelures introduites sur le spectre du signal lumineux filtré 2A sont parfaitement contrastées, c'est-à-dire que les minima de la transmission lumineuse sont nuls, quand le coupleur d'entrée 103 et le coupleur de sortie 104 sont des coupleurs 50/50, séparant de manière égale le signal lumineux source 1A dans les deux bras 101, 102 de l'interféromètre de filtrage 100 (voir figure 3).

Le contraste des cannelures est défini comme étant le rapport entre la différence et la somme de la valeur de la transmission lumineuse (respectivement de la réponse) maximale et de la valeur de la transmission lumineuse (respectivement de la réponse) minimale.

Deux maxima de transmission successifs sont distants, en fréquence, de l'intervalle spectral libre ISL. De la même manière, deux minima de transmission successifs sont distants, en fréquence, de l'intervalle spectral libre ISL égal à $c/\Delta L_{opt}$.

De plus, la distance, exprimée en fréquence, entre un maximum de transmission et un minimum de transmission adjacent est égale à la moitié de l'intervalle spectral libre ISL (également exprimé en fréquence), soit ISL/2

Un autre paramètre important de la réponse de l'interféromètre de filtrage 100 est sa finesse F. Celle-ci est définie comme étant le rapport entre l'intervalle spectral libre ISL, exprimé en fréquence, et la pleine largeur à mi-hauteur en fréquence FWHM(f) des cannelures.

Ainsi, dans cette première variante du premier mode de réalisation, la finesse F de l'interféromètre de filtrage 100 à deux ondes est ici égale à 2, la largeur des cannelures de la fonction de réponse R1 (voir figure 5) étant égale à la moitié de la période de ces mêmes cannelures.

Dans une deuxième variante, représentée sur la figure 4, l'interféromètre de filtrage 100 est un interféromètre résonant à ondes multiples.

Plus précisément, selon cette deuxième variante du premier mode de réalisation, l'interféromètre de filtrage 100 comprend un résonateur en anneau 101.

Il est connu que, d'un point de vue de sa transmission lumineuse ou de sa réponse, un tel interféromètre de filtrage 100 est équivalent à un interféromètre de Fabry-Perot.

Le signal lumineux source 1A est injecté dans l'interféromètre de filtrage 100 au moyen d'une fibre optique couplée sur le port d'entrée 100A de l'interféromètre de filtrage 100.

Le signal lumineux source 1A, de puissance $P_0$, est alors couplé dans un anneau à fibre optique 101 au moyen d'un coupleur à fibre optique d'entrée 103.

De manière générale, un coupleur à fibre optique présente un coefficient de couplage C qui correspond au rapport entre la puissance lumineuse couplée dans l'anneau à fibre optique 101 et la puissance du signal lumineux source 1A injecté dans le port d'entrée 100A.

Après couplage, le signal lumineux circule dans l'anneau à fibre optique 101 et à chaque tour dans cet anneau à fibre optique 101, une partie du signal lumineux est prélevée et couplée vers un port de sortie 100B de l'interféromètre de filtrage 100 au moyen d'un coupleur à fibre optique de sortie 104 qui est ici identique au coupleur à fibre optique d'entrée 103, et présente donc le même coefficient de couplage C que le coupleur à fibre optique d'entrée 103.

De manière complémentaire, la partie du signal lumineux incidente sur le coupleur à fibre optique de sortie 104 qui n'est pas couplée vers le port de sortie 100B est transmise dans l'anneau à fibre optique 101 de l'interféromètre de filtrage 100 avec un coefficient de transmission T.

De manière analogue, ce coefficient de transmission T est défini comme étant le rapport entre la puissance lumineuse transmise par l'un des coupleurs à fibre optique dans l'anneau à fibre optique 101 et la puissance lumineuse incidente sur ce coupleur à l'intérieur de l'anneau à fibre optique 101.

Le coefficient de couplage C et le coefficient de transmission T sont liés par la relation suivante : 1 - (C + T) = A, où le terme A correspond aux pertes intrinsèques de l'anneau 101 à fibre optique correspondant essentiellement aux pertes par absorption ou par diffusion dans l'anneau 101.

On considérera, par la suite, que les pertes dans l'anneau 101 sont très faibles, typiquement de l'ordre de quelques pour cent, de sorte qu'on peut les négliger dans le reste de la description. Ainsi, on a la relation : C+T =1.

On comprendra à la lumière de la description de la figure 4, que l'interféromètre de filtrage 100 fonctionne ici à la manière d'un résonateur optique, une pluralité d'ondes circulant dans l'anneau 101 de l'interféromètre de filtrage 100, de sorte que les différents signaux lumineux couplés vers le port de sortie 100B par le coupleur de sortie 104 se superposent et interfèrent ensemble pour former le signal lumineux filtré 2A transmis sur le port de sortie 100B puis couplé dans une fibre optique pour être conduit vers le photo-détecteur 5 fibre afin de mesurer la puissance lumineuse du signal lumineux filtré 2A.

Comme représenté sur la figure 4, l'interféromètre de filtrage 100 comporte ici une bobine de fibre optique 105, de longueur optique $\Delta L_{opt}$ égale ici aussi à $1,45.10^3$ m, disposée dans l'anneau 101 de l'interféromètre de filtrage 100.

Ainsi configuré dans cette seconde variante, l'interféromètre de filtrage 100 filtre le signal lumineux source 1A et délivre le signal lumineux filtré 2A.

On a représenté sur la figure 5 des courbes de réponse $P_{in}/P_0$ d'un tel interféromètre de filtrage 100 en fonction de différentes valeurs des coefficients de couplage C et de transmission T.

De manière connue, ces courbes de réponse Pin/$P_0$ suivent une loi du type : $P_{in}/P_0 = 1 / [1 + m \sin^2(\Delta\phi/2)]$, où $\Delta\phi$ est la différence de phase introduite par l'interféromètre de filtrage 100 lors de la propagation sur un tour de l'anneau à fibre optique 101, et m représente, comme dans un interféromètre de Fabry-Perot, le « facteur d'Airy » de l'interféromètre de filtrage 100 dans une configuration de résonateur en anneau (voir figure 4).

Ce facteur d'Airy m est lié au coefficient de transmission T des deux coupleurs à fibre optique 103, 104 par la relation : $m = 4.T/(1-T)^2 = 4.T/C^2$ (car C+T = 1, voir *supra*).

La courbe R2 correspond à un interféromètre de filtrage 100 dans la deuxième variante du premier mode de réalisation, où les coupleurs 103, 104 de l'interféromètre de filtrage 100 présentent un coefficient de couplage C égal à 50% et un coefficient de transmission T égal à 50%.

La courbe R3 correspond à un interféromètre de filtrage 100 dans la deuxième variante du premier mode de réalisation, où les coupleurs 103, 104 de l'interféromètre de filtrage 100 présentent un coefficient de couplage C égal à 5% et un coefficient de transmission T égal à 95%.

On rappelle ici que sur l'axe des abscisses est reportée la fréquence optique réduite $f_{opt}$/ISL, ISL étant l'intervalle spectral libre de l'interféromètre de filtrage 100.

De manière classique, on retrouve que les courbes de réponse d'un résonateur en anneau sont périodiques, les cannelures étant également séparées par l'intervalle spectral libre ISL.

De manière connue, l'intervalle spectrale libre ISL de l'interféromètre de filtrage 100 présente un intervalle spectral libre ISL égal à c/$L_{ann}$ où $L_{ann}$ est la longueur optique de l'anneau résonant de l'interféromètre de filtrage 100, comprenant l'anneau à fibre optique 101 et la bobine de fibre optique 105.

On considérera ici qu'on observe, dans le cas de l'interféromètre de filtrage 100 représenté sur la figure 4, que les cannelures obtenues ne sont pas parfaitement contrastées.

En effet, les courbes de réponse R2, R3 présentent des valeurs minimales de transmission qui ne sont pas nulles mais égales à 1/(1+m), le contraste des cannelures étant donc égal à m/(m+2).

De plus, de manière connue, la finesse F d'un résonateur en anneau, similaire à un interféromètre de Fabry-Perot est telle que F = $\pi$ $m^{1/2}$/2.

On reconnaît donc sur la figure 5 que pour l'interféromètre de filtrage 100 de la figure 4 :

- le contraste des cannelures augmente si le coefficient de transmission T des coupleurs 103, 104 de l'interféromètre de filtrage 100 augmente, et
- la finesse F augmente également avec ce coefficient de transmission T.

La courbe de réponse R3 de la figure 5 étant obtenue pour un coefficient de transmission T égal à 95%, cette courbe de réponse R3 présente des cannelures plus fines et plus contrastées que la courbe de réponse R2 de la figure 5 qui a été obtenue pour un coefficient de transmission T égal à 50%.

On a reporté dans le tableau 1 ci-dessous les différents paramètres de l'interféromètre de filtrage 100 à ondes multiples dans cette deuxième variante du premier mode de réalisation.

**Tableau 1 (simple passage)**

|  | Courbe de réponse R2 | Courbe de réponse R3 |
|---|---|---|
| Coefficient de couplage C | 50% | 5% |
| Coefficient de transmission T | 50% | 95% |
| Longueur optique de l'anneau $L_{ann}$ (m) | 1450 | 1450 |
| Facteur d'Airy m | 8 | 1520 |
| Contraste | 0,8 | 0,999 |
| Finesse F | 4,4 | 61,2 |
| Intervalle spectral libre ISL (kHz) | 206,9 | 206,9 |
| Rapport $f_m$/ISL ($f_m$ = 103,45kHz) | 0,5 | 0,5 |

On a représenté sur la figure 6, en ordonnée logarithmique, des courbes S0, S1, S2, S3 de densité de puissance de bruit obtenues avec l'analyseur de spectre 6 de la figure 2.

Ces courbes S0, S1, S2, S3 représentent les variations (réduction ou augmentation) de la densité spectrale de puissance, exprimée en décibels, du bruit relatif d'intensité en excès $B_{RIN}$ en fonction de la fréquence électrique réduite $f_{élec}$/ISL avant et après filtrage par l'interféromètre de filtrage 100.

Ainsi, la courbe S0 de la figure 6, qui correspond à la densité spectrale de puissance de bruit relatif d'intensité en excès du signal lumineux source 1A n'ayant pas été filtré par l'interféromètre de filtrage 100, présente une valeur constante égale à 0 dB.

Les courbes S1, S2, S3 correspondent, elles, aux courbes de réponse R1, R2, R3 de la figure 5.

Sur la figure 6, on a représenté pour chaque courbe S1, S2, S3 un intervalle de fréquences INT1, INT2, INT3 qui est centré autour d'une fréquence optimale $f_{optim}$ égale à ISL/2 et de largeur $\Delta$f égale à [0,9-(3/2F)] ISL.

On remarque que, pour chaque courbe S1, S2, S3, l'intervalle de fréquences INT1, INT2, INT3 comprend la fréquence de modulation $f_m$ de l'interféromètre de mesure 2.

De plus, pour cet intervalle de fréquences INT1, INT2, INT3, et en particulier pour la fréquence de modulation $f_m$, on remarque que la densité de puissance de bruit relatif d'intensité en excès des courbes S1, S2, S3 a été réduit par rapport à la courbe S0 correspondant au signal lumineux source 1A non filtré.

Plus précisément, pour l'interféromètre de filtrage 100 à deux ondes de la figure 3, la valeur de la densité de puissance de bruit d'intensité en excès sur le signal lumineux filtré 2A a été réduite de 3 dB (courbe S1) par rapport au signal lumineux non filtré (courbe S0).

De même, pour l'interféromètre de filtrage 100 à ondes multiples de la figure 4, dans le cas d'un coefficient de couplage C égal à 50% (courbe S2) la valeur de la densité de puissance de bruit d'intensité en excès sur le signal lumineux filtré 2A a été réduite de 2 dB par rapport au signal lumineux non filtré (courbe S0).

Pour l'interféromètre de filtrage 100 à résonateur en anneau de la figure 4, dans le cas d'un coefficient de couplage C égal à 5% (courbe S3) la valeur de la densité de puissance de bruit d'intensité en excès sur le signal lumineux filtré 2A a été réduite de 13 dB par rapport au signal lumineux non filtré (courbe S0).

La différence d'efficacité de filtrage entre les courbes S2 et S3 est essentiellement due au fait que les cannelures de la courbe de réponse associée R2 sont moins contrastées que celles de la courbe de réponse R3.

En effet, le bruit relatif d'intensité en excès à la fréquence ISL/2 est essentiellement dû au battement interférométrique entre les fréquences optiques $2k.ISL$ des maxima de transmission et les minima de transmission décalés d'une fréquence ISL/2 et ce battement interférométrique dépend de la racine carrée du produit des puissances lumineuses. Il est donc essentiel que ces minima soient le plus proche de zéro possible.

On a reporté dans le tableau 2 ci-dessous les différentes valeurs (en dB) de réduction de la densité de puissance de bruit relatif d'intensité en excès (RIN) à la fréquence optimale $f_{optim} = ISL/2$ pour les trois cas précédents (voir courbes S1, S2, et S3 de la figure 6), ainsi que pour d'autres valeurs du ratio T/C de coefficient de transmission T sur coefficient de couplage C des coupleurs optiques 103, 104 de l'interféromètre de filtrage 100.

**Tableau 2 (simple passage)**

| Ratio T(%) / C(%) | Finesse F | Transmission moyenne | Réduction de la densité de puissance de RIN à la fréquence ISL/2 | Augmentation de la densité de puissance de RIN à la fréquence ISL |
|---|---|---|---|---|
| Mach-Zehnder(S1) | 2 | -3 dB | -3 dB | +2 dB |
| 50/50 (S2) | 4 | -5 dB | -2 dB | +2 dB |
| 60/40 | 6 | -6 dB | -3 dB | +3 dB |
| 70/30 | 9 | -7,5 dB | -4,5 dB | +4,5 dB |
| 80/20 | 14 | -9,5 dB | -6,5 dB | +6,5 dB |
| 90/10 | 30 | -13 dB | -10 dB | +10 dB |
| 95/5 (S3) | 61 | -16 dB | -13 dB | +13 dB |
| 99/1 | 312 | -22 dB | -21 dB | +19 dB |

On a également reporté dans le tableau 2 :

- la finesse F pour chacune des configurations de l'interféromètre de filtrage 100 ;
- la valeur de la moyenne de la transmission lumineuse, exprimée en dB, et
- les différentes valeurs (en dB) d'augmentation de la densité de puissance de bruit relatif d'intensité en excès (RIN) à la fréquence égale à l'intervalle spectral libre ISL, cette fréquence correspondant aux battements des cannelures du spectre optique de la source lumineuse 1 qui sont séparées en fréquence par cet intervalle spectral libre ISL (voir figure 5).

On observe sur le tableau 2 que plus le ratio T/C est élevé, *i.e.* plus les cannelures sont fines et contrastées, plus le bruit relatif d'intensité en excès $B_{RIN}$ est réduit, à la fréquence optimale $f_{optim} = ISL/2$, dans le signal lumineux filtré 2A par l'interféromètre de filtrage 100.

Inversement, le bruit relatif d'intensité en excès BRIN est augmenté, à la fréquence égale à l'intervalle spectral libre ISL, dans le signal lumineux filtré 2A par l'interféromètre de filtrage 100.

Cependant, en utilisant un interféromètre de filtrage 100 qui présente un ratio T/C élevé, on constate que la transmission lumineuse moyenne diminue fortement. En effet, la transmission lumineuse moyenne est approximativement proportionnelle à l'inverse de la finesse F, celle-ci augmentant avec le ratio T/C.

Cette diminution de la puissance lumineuse du signal lumineux filtré 2A par l'interféromètre de filtrage 100 conduit alors à une remontée du bruit photonique relatif de ce signal lumineux filtré 2A.

En résumé, on a vu qu'il était possible de concevoir un interféromètre de filtrage 100, c'est-à-dire ici ajuster son intervalle spectral libre ISL et sa finesse F de telle sorte que la fréquence de modulation $f_m$ du signal lumineux filtré 2A qui va être utilisé par l'interféromètre de mesure 2 pour effectuer la mesure du paramètre à mesurer $\Omega_R$ soit comprise dans l'intervalle de fréquences INT1, INT2, INT3 centré autour de la fréquence optimale ISL/2 et de largeur $\Delta f = [0,9-(3/2F)]$ ISL.

De cette façon, le bruit d'intensité en excès sur le signal lumineux filtré 2A est réduit par rapport à un signal lumineux non filtré.

Cette solution est générale, et il n'est pas besoin que la fréquence de modulation $f_m$ soit proche de la valeur ISL/2.

En effet, dans le cas le plus général, l'intervalle de fréquences INT1, INT2, INT3 peut être centré en n'importe quelle fréquence égale à (2k+1) ISL/2, ces fréquences correspondant à des franges sombres, c'est-à-dire des creux de la courbe de réponse autour desquelles le bruit d'intensité en excès est réduit.

Notons que le fonctionnement décrit ne nécessite pas de fibre à conservation de polarisation. En effet, une fibre optique monomode ordinaire ne conservant pas la polarisation, présente toujours deux modes propres orthogonaux en polarisation. Ces deux modes propres ont un indice légèrement différent et vont donc conduire à un intervalle spectral libre ISL légèrement différent, mais en termes de réduction du bruit relatif d'intensité en excès à basses fréquences, les deux modes auront le même comportement.

Afin d'améliorer la réduction du bruit relatif d'intensité en excès, sans trop de réduction de la puissance lumineuse moyenne transmise qui augmente le bruit photonique relatif, on peut utiliser un interféromètre de filtrage en configuration double passage.

Ainsi, par rapport à une configuration en simple passage comme précédemment, le contraste des cannelures est amélioré et, à réduction de bruit relatif d'intensité en excès donnée, la finesse de l'interféromètre de filtrage en double passage est plus faible et donc l'atténuation du signal lumineux filtré limitée.

Deuxième mode de réalisation

Ainsi, on a représenté sur la figure 7 un dispositif de mesure interférométrique 20 comportant un interféromètre de filtrage 200 en configuration double passage.

Dans une première variante, représentée sur la figure 9, l'interféromètre de filtrage 200 comprend un interféromètre à deux ondes, de type Mach-Zehnder, similaire à l'interféromètre 100 de la figure 3.

Cet interféromètre de filtrage 200 comprend par ailleurs ici un miroir 206 placé après le deuxième coupleur en Y 204 de sorte que le signal lumineux sortant par le deuxième port 200B est réfléchi en redirection du coupleur en Y 204 pour circuler à nouveau dans l'interféromètre de Mach-Zehnder 200.

De cette manière, le signal lumineux entrant dans l'interféromètre de filtrage 200 par le premier port 200A, ressort également par ce premier port 200A après recirculation dans les deux bras de l'interféromètre de Mach-Zehnder.

On notera qu'un interféromètre de filtrage à deux ondes de type Michelson ne fonctionnerait pas en configuration double passage car l'onde retour serait mélangée avec l'onde réfléchie au premier passage.

En configuration double passage, il est avantageux de contrôler la polarisation afin que le signal lumineux se propage dans l'interféromètre de filtrage 200 selon le même mode propre de polarisation, à l'aller et au retour.

Pour cela, l'interféromètre de filtrage 200 comprend ici une fibre optique à conservation de polarisation.

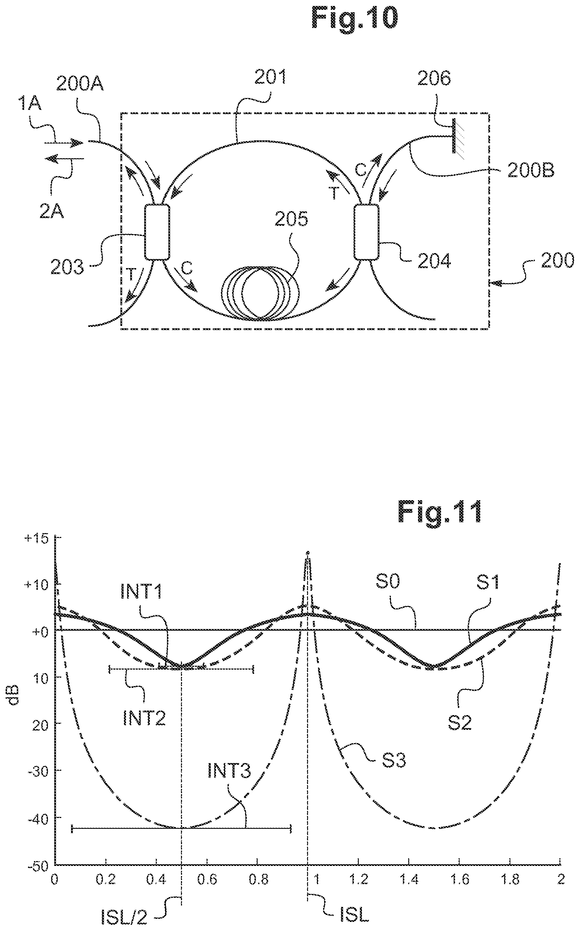

De la même manière, dans une deuxième variante, représentée sur la figure 10, l'interféromètre de filtrage 200 comprend un interféromètre résonant en anneau à ondes multiples similaire à l'interféromètre de filtrage 100 de la figure 4.

On notera, comme ci-dessus, qu'un interféromètre de filtrage à ondes multiples de type Fabry-Perot ne fonctionnerait pas en configuration double passage car l'onde retour serait mélangée avec l'onde réfléchie au premier passage.

Pour les mêmes raisons que précédemment, l'interféromètre de filtrage 200 comprend ici une fibre optique à conservation de polarisation.

De plus, de manière avantageuse, l'anneau de l'interféromètre de filtrage 200 à ondes multiples (voir figure 10) a une surface nulle sinon, ce résonateur étant aussi sensible à l'effet SAGNAC, les cannelures du chemin retour se retrouvent décalées par rapport au chemin aller conduisant à des pertes très importantes.

Une telle configuration à surface nulle peut être réalisée de deux manières différentes :

- le résonateur est réalisé grâce à une fibre optique repliée sur elle-même à partir de son milieu puis enroulée, ou
- le résonateur est divisé en deux demi-bobines de fibre optique identiques dont les axes sont en sens opposé.

Cet interféromètre de filtrage 200 comprend également un miroir 206 placé après le deuxième coupleur à fibre 204.

L'interféromètre de filtrage 200 étant ainsi configuré, avec le signal lumineux source et le signal lumineux filtré 2A entrant et sortant par le même port de l'interféromètre de filtrage 200, le dispositif de mesure interférométrique 20 comporte alors un circulateur optique 7 permettant d'abord, de diriger le faisceau lumineux source 1A vers l'interféromètre de filtrage 200, puis de diriger le faisceau lumineux filtré 2A vers l'interféromètre de mesure 2.

Pour compenser les pertes générées dans l'interféromètre de filtrage 200, le dispositif de mesure interférométrique 20 comporte préférentiellement un amplificateur optique 8 placé entre l'interféromètre de filtrage 200 et l'interféromètre de mesure 2.

Plus précisément, l'amplificateur optique 8 est ici placé après le circulateur optique 7, et avant l'interféromètre de mesure 2.

L'amplificateur optique 8 est ici un amplificateur optique à fibre dopée, par exemple un amplificateur optique à fibre dopée par une terre rare telle que l'erbium (« *Erbium-doped liber amplifier*» ou EDFA en anglais).

On a représenté sur la figure 8, un exemple de banc optique pouvant être utilisé pour évaluer les performances de l'interféromètre de filtrage 200 lorsque celui-ci est en configuration double passage.

Ce banc comprend la source lumineuse 1, le circulateur optique 7, l'interféromètre de filtrage 200 et l'amplificateur optique 8. De manière analogue au premier mode de réalisation (voir figure 2), ce banc optique comprend également des moyens d'analyse avec son photo-détecteur 5 et son analyseur de spectre électrique 6, qui délivre le spectre électrique 6A permettant de déterminer la variation de bruit d'intensité en excès obtenue grâce à l'interféromètre de filtrage 200.

On a ainsi représenté sur la figure 11 les courbes S1, S2, S3 obtenues avec l'analyseur de spectre de la figure 8, en normant à 0 dB la densité de puissance de bruit d'intensité en excès d'origine, ces courbes représentant les valeurs de réduction (ou d'augmentation) du bruit d'intensité en excès en fonction de la fréquence électrique réduite.

La courbe S1 est obtenue pour un interféromètre de filtrage 200 du type de celui décrit sur la figure 9, qui est un interféromètre à deux ondes.

La courbe S2 est obtenue pour un interféromètre de filtrage 200 du type de celui de la figure 10, qui est un interféromètre résonant à ondes multiples, dans lequel le coefficient de couplage C est égal à 50% et le coefficient de transmission T égal à 50%.

La courbe S3 est obtenue pour un interféromètre de filtrage 200 du type de celui de la figure 10, qui est un interféromètre résonant à ondes multiples, dans lequel le coefficient de couplage C est égal à 5% et le coefficient de transmission T égal à 95%.

Sur la figure 11, on a représenté pour chaque courbe S1, S2, S3 un intervalle de fréquences INT1, INT2, INT3 qui est centré autour d'une fréquence optimale $f_{optim}$ égale encore ici à ISL/2 et de largeur $\Delta f$ égale à $[0,9-(3/2F)]$ ISL.

On remarque que, pour chaque courbe S1, S2, S3, l'intervalle de fréquences INT1, INT2, INT3 comprend la fréquence de modulation $f_m$ de l'interféromètre de mesure 2.

De plus, pour cet intervalle de fréquences INT1, INT2, INT3, et en particulier pour la fréquence de modulation $f_m$, on remarque que le bruit d'intensité en excès des courbes S1, S2, S3 a été réduit par rapport à la courbe S0 correspondant à un signal lumineux non filtré.

Plus précisément, pour l'interféromètre de filtrage 200 de la figure 9, qui est un interféromètre à deux ondes, la valeur de la densité de puissance de bruit d'intensité en excès sur le signal lumineux filtré 2A a été réduite de -8 dB (courbe S1) par rapport au signal lumineux non filtré (courbe S0).

De même, pour l'interféromètre de filtrage 200 de la figure 10, qui est un interféromètre résonant à ondes multiples, dans le cas d'un coefficient de couplage C égal à 50% (courbe S2) la valeur de la densité de puissance de bruit d'intensité en excès sur le signal lumineux filtré 2A a été réduite de -8 dB par rapport au signal lumineux non filtré (courbe S0).

Pour l'interféromètre de filtrage 200 de la figure 10, qui est un interféromètre résonant à ondes multiples, dans le cas d'un coefficient de couplage C égal à 5% (courbe S3) la valeur de la densité de puissance de bruit d'intensité en excès sur le signal lumineux filtré 2A a été réduite de -42 dB par rapport au signal lumineux non filtré (courbe S0).

On a reporté dans le tableau 3 ci-dessous les différentes valeurs de réduction de la densité de puissance de bruit relatif d'intensité en excès (RIN) à la fréquence optimale $f_{optim}$ = ISL/2 pour les trois cas précédents (voir courbes S1, S2, et S3 de la figure 11), ainsi que pour d'autres valeurs du ratio T/C de coefficient de transmission T sur coefficient de couplage C des coupleurs optiques 203, 204 de l'interféromètre de filtrage 200.

On a également reporté dans le tableau 3 :

- la valeur de la moyenne de la transmission lumineuse, exprimée en dB, et
- les différentes valeurs d'augmentation de la densité de puissance de bruit relatif d'intensité en excès (RIN) à la fréquence égale à l'intervalle spectral libre ISL.

**Tableau 3 (double passage)**

| Ratio T(%) / C(%) | Finesse F | Transmission moyenne | Réduction de la densité de puissance de RIN à la fréquence ISL/2 | Augmentation du RIN (dB.V) à la fréquence ISL |
|---|---|---|---|---|
| Mach-Zehnder(S1) | 2,8 | -4 dB, | -8 dB | +3 dB |
| 50/50 (S2) | 5,7 | -7 dB | -8 dB | +5 dB |
| 60/40 | 8,5 | -9 dB | -12 dB | +6,5 dB |
| 70/30 | 12,7 | -10 dB | -16,5 dB | +8,5 dB |
| 80/20 | 19,8 | -12,5 dB | -22,5 dB | +10,5 dB |
| 90/10 | 42,4 | -15,5 dB | -32,5 dB | +13,5 dB |
| 95/5(S3) | 86,3 | -18,5 dB | -42 dB | +16,5 dB |
| 99/1 | 441,2 | -24,5 dB | -65,5 dB | +21 dB |

On constate ainsi que lorsque l'interféromètre de filtrage 200 est configuré en double passage (cas du dispositif de mesure interférométrique 20 de la figure 7), une réduction efficace du bruit d'intensité en excès $B_{RIN}$ sur le signal lumineux filtré 2A est obtenue avec beaucoup moins d'atténuation de la puissance lumineuse moyenne transmise qu'avec l'interféromètre de filtrage 100 en simple passage du premier mode de réalisation (voir par exemple tableau 2).

Ceci est dû au fait que la recirculation du signal lumineux dans l'interféromètre de filtrage 200, grâce au miroir 206, permet d'accentuer les creux entre les cannelures et obtenir un bien meilleur contraste de celles-ci.

Même réduite en double passage, à réduction de RIN donnée, l'atténuation en puissance optique reste significative (voir tableau 3). Il est donc avantageux de réamplifier le signal lumineux filtré 2A en sortie de l'interféromètre de filtrage 200 au moyen de l'amplificateur optique 8.

Ainsi, dans cette variante du deuxième mode de réalisation (voir figure 10), dans laquelle l'interféromètre de filtrage 200 comprend un résonateur en anneau et deux coupleurs optiques 203, 204, les ratios T/C de coefficient de transmission T sur coefficient de couplage C des coupleurs optiques 203, 204 de l'interféromètre de filtrage 200 sont, de manière préférée, compris entre 70/30 et 95/5.

De manière encore plus préférée, le ratio T/C est compris entre 80/20 et 90/10.

Dans ce deuxième mode de réalisation, on prendra alors garde à ce que la densité de puissance de bruit relatif total en entrée de l'amplificateur optique 8 soit au moins inférieur de 3 à 5 dB au bruit photonique relatif souhaité en sortie du système complet.

**Tableau 3 (double passage)**

| Ratio T(%) / C(%) | Finesse F | Transmission moyenne | Réduction de la densité de puissance de RIN à la fréquence ISL/2 | Augmentation du RIN (dB.V) à la fréquence ISL |
|---|---|---|---|---|
| Mach-Zehnder(S1) | 2,8 | -4 dB | -8 dB | +3 dB |
| 50/50 (S2) | 5,7 | -7 dB | -8 dB | +5 dB |
| 60/40 | 8,5 | -9 dB | -12 dB | +6,5 dB |
| 70/30 | 12,7 | -10 dB | -16,5 dB | +8,5 dB |
| 80/20 | 19,8 | -12,5 dB | -22,5 dB | +10,5 dB |
| 90/10 | 42,4 | -15,5 dB | -32,5 dB | +13,5 dB |
| 95/5 (S3) | 86,3 | -18,5 dB | -42 dB | +16,5 dB |
| 99/1 | 441,2 | -24,5 dB | -65,5 dB | +21 dB |

On constate ainsi que lorsque l'interféromètre de filtrage 200 est configuré en double passage (cas du dispositif de mesure interférométrique 20 de la figure 7), une réduction efficace du bruit d'intensité en excès BRIN sur le signal lumineux filtré 2A est obtenue avec beaucoup moins d'atténuation de la puissance lumineuse moyenne transmise qu'avec l'interféromètre de filtrage 100 en simple passage du premier mode de réalisation (voir par exemple tableau 2).

Ceci est dû au fait que la recirculation du signal lumineux dans l'interféromètre de filtrage 200, grâce au miroir 206, permet d'accentuer les creux entre les cannelures et obtenir un bien meilleur contraste de celles-ci.

Même réduite en double passage, à réduction de RIN donnée, l'atténuation en puissance optique reste significative (voir tableau 3). Il est donc avantageux de réamplifier le signal lumineux filtré 2A en sortie de l'interféromètre de filtrage 200 au moyen de l'amplificateur optique 8.

Ainsi, dans cette variante du deuxième mode de réalisation (voir figure 10), dans laquelle l'interféromètre de filtrage 200 comprend un résonateur en anneau et deux coupleurs optiques 203, 204, les ratios T/C de coefficient de transmission T sur coefficient de couplage C des coupleurs optiques 203, 204 de l'interféromètre de filtrage 200 sont, de manière préférée, compris entre 70/30 et 95/5.

De manière encore plus préférée, le ratio T/C est compris entre 80/20 et 90/10.

Dans ce deuxième mode de réalisation, on prendra alors garde à ce que la densité de puissance de bruit relatif total en entrée de l'amplificateur optique 8 soit au moins inférieur de 3 à 5 dB au bruit photonique relatif souhaité en sortie du système complet.

## Revendications

1. Dispositif de mesure interférométrique (10 ; 20) comportant :

   - une source lumineuse (1) d'émission spontanée à spectre large,
   - un interféromètre de mesure (2) comprenant un modulateur, et recevant, en entrée, un signal lumineux (2A) de puissance lumineuse d'entrée $P_{in}$ et délivrant, en sortie, un signal lumineux modulé (2B) de puissance lumineuse de sortie $P_{out}$, ledit signal lumineux modulé (2B) étant modulé à une fréquence de modulation $f_m$, dépendant d'un paramètre physique ($\Omega_R$) à mesurer et étant proportionnel à la puissance lumineuse d'entrée $P_{in}$, et
   - un détecteur de rayonnement optique (3), recevant le signal lumineux modulé (2B) sortant dudit interféromètre de mesure (2) et délivrant un signal électrique modulé (3A) proportionnel à ladite puissance lumineuse de sortie $P_{out}$,

   ledit dispositif de mesure interférométrique (10 ; 20) étant **caractérisé en ce qu'**il comporte un interféromètre de filtrage (100 ; 200) insensible audit paramètre physique ($\Omega_R$) à mesurer placé entre ladite source lumineuse (1) et ledit interféromètre de mesure (2) ou entre ledit interféromètre de mesure (2) et le détecteur de rayonnement optique (3), ledit interféromètre de filtrage (100 ; 200) présentant un intervalle spectral libre ISL, exprimé en fréquence, et une finesse F sélectionnés de sorte qu'un intervalle de fréquences (INT1, INT2, INT3), centré autour d'une fréquence optimale $f_{optim}$ égale à (2k+1) ISL/2, k étant un entier naturel, et de largeur $\Delta f$ égale à [0,9-(3/2F)] ISL comprenne la fréquence de modulation $f_m$ du signal lumineux modulé (2B) en sortie de l'interféromètre de mesure (2).

2. Dispositif de mesure interférométrique (10 ; 20) selon la revendication 1, dans lequel ledit interféromètre de filtrage (100 ; 200) est un interféromètre à deux ondes.

3. Dispositif de mesure interférométrique (10 ; 20) selon la revendication 1, dans lequel ledit interféromètre de filtrage (100 ; 200) est un interféromètre résonant à ondes multiples.

4. Dispositif de mesure interférométrique (20) selon l'une des revendications 2 et 3, dans lequel ledit interféromètre de filtrage (200) est configuré en double passage.

5. Dispositif de mesure interférométrique (10 ; 20) selon l'une des revendications 1 à 4, dans lequel ledit interféromètre de filtrage (100 ; 200) comprend un interféromètre à fibre optique.

6. Dispositif de mesure interférométrique (20) selon la revendication 5, dans lequel ledit interféromètre de filtrage (200) à fibre optique comprend une fibre optique à conservation de polarisation.

7. Dispositif de mesure interférométrique (20) selon l'une des revendications 1 à 6, dans lequel ledit interféromètre de filtrage (200) comprend un résonateur en anneau (101) et deux coupleurs optiques (203, 204) dont les ratios T/C de coefficient de transmission T sur coefficient de couplage C sont compris entre 70/30 et 95/5.

8. Dispositif de mesure interférométrique (20) selon la revendication 7, dans lequel le résonateur en anneau (101) présente une surface nulle.

9. Dispositif de mesure interférométrique (20) selon l'une des revendications 1 à 8, dans lequel, lorsque ledit interféromètre de filtrage (200) est placé entre ladite source lumineuse (1) et ledit interféromètre de mesure (2), ledit dispositif de mesure interférométrique (20) comporte un amplificateur optique (8) à fibre dopée placé entre ledit interféromètre de filtrage (200) et ledit interféromètre de mesure (2).

10. Dispositif de mesure interférométrique (10 ; 20) selon l'une des revendications 1 à 9, dans lequel ledit interféromètre de mesure (2) comprend un interféromètre en anneau de S$_{AGNAC}$ à fibre optique.

11. Dispositif de mesure interférométrique (20) selon les revendications 5 et 10, dans lequel la longueur de la fibre optique de l'interféromètre de filtrage (200) est légèrement supérieure, de préférence entre 2% et 5% plus longue, à la longueur de la fibre optique de l'interféromètre en anneau de S$_{AGNAC}$.

**Patentansprüche**

1. Interferometrische Meßvorrichtung (10; 20) mit

- einer Lichtquelle (1) spontaner Ausstrahlung mit breitem Spektrum,
- einem Meßinterferometer (2), der einen Modulator aufweist und am Eingang ein Lichtsignal (2A) einer Eingangslichtstärke P$_{in}$ empfängt und am Ausgang ein moduliertes Lichtsignal (2B) einer Ausgangslichtstärke P$_{out}$ abgibt, wobei das modulierte Lichtsignal (2B) mit einer Modulationsfrequenz f$_m$ moduliert ist, die von einem zu messenden und zur Eingangslichtstärke P$_{in}$ proportionalen physikalischen Parameter ($\Omega_R$) abhängt, und
- einem optischen Strahlungsdetektor (3), der das aus dem Meßinterferometer (2) austretende modulierte Lichtsignal (2B) empfängt und ein moduliertes elektrisches, zur Ausgangslichtstärke P$_{out}$ proportionales Signal (3A) abgibt,

wobei die interferometrische Meßvorrichtung (10; 20) **dadurch gekennzeichnet ist, daß** sie ein gegenüber dem zu messenden physikalischen Parameter ($\Omega_R$) unempfindliches Filterungsinterferometer (100; 200) aufweist, das zwischen der Lichtquelle (1) und dem Meßinterferometer (2) oder zwischen dem Meßinterferometer (2) und dem optischen Strahlungsdetektor (3) angeordnet ist, wobei das Filterungsinterferometer (100; 200) ein freies, als Frequenz ausgedrücktes Spektralintervall ISL und eine Feinheit F aufweist, die derart ausgewählt sind, daß ein um eine optimale Frequenz f$_{optim}$, die gleich (2k + 1) ISL/2 ist, wobei k eine natürliche ganze Zahl ist, zentriertes und eine Breite $\Delta$f gleich [0,9 - (3/2F)] ISL aufweisendes Frequenzintervall (INT1, INT2, INT3) am Ausgang des Meßinterferometers (2) die Modulationsfrequenz f$_m$ des modulierten Lichtsignals (2B) aufweist.

2. Interferometrische Meßvorrichtung (10; 20) gemäß Anspruch 1, bei der das Filterungsinterferometer (100; 200) ein Zweiwelleninterferometer ist.

3. Interferometrische Meßvorrichtung (10; 20) gemäß Anspruch 1, bei der das Filterungsinterferometer (100; 200) ein Mehrwellenresonanzinterferometer ist.

4. Interferometrische Meßvorrichtung (20) gemäß einem der Ansprüche 2 und 3, bei der das Filterungsinterferometer (200) für doppelten Durchhang ausgelegt ist.

5. Interferometrische Meßvorrichtung (10; 20) gemäß einem der Ansprüche 1 bis 4, bei der das Filterungsinterferometer (100; 200) ein Interferometer mit optischen Fasern aufweist.

6. Interferometrische Meßvorrichtung (20) gemäß Anspruch 5, bei der das Filterungsinterferometer (200) mit optischer Faser eine optische Faser mit Polarisationserhalt aufweist.

7. Interferometrische Meßvorrichtung (20) gemäß einem der Ansprüche 1 bis 6, bei der das Filterungsinterferometer (200) einen Ringresonator (101) und zwei optische Koppler (203, 204), deren Verhältnis T/C aus Übertragungskoeffizient T und Kopplungskoeffizient C zwischen 70/30 und 95/5 beträgt, aufweist.

8. Interferometrische Meßvorrichtung (20) gemäß Anspruch 7, bei der der Ringresonator (101) eine Oberfläche Null aufweist.

9. Interferometrische Meßvorrichtung (20) gemäß einem der Ansprüche 1 bis 8, bei der die interferometrische Meßvorrichtung (20), wenn das Filterungsinterferometer (200) zwischen der Lichtquelle (1) und dem Meßinterferometer (2) angeordnet ist, einen optischen Verstärker (8) mit dotierter Faser aufweist, der zwischen dem Filterungsinterferometer (200) und dem Meßinterferometer (2) angeordnet ist.

10. Interferometrische Meßvorrichtung (10; 20) gemäß einem der Ansprüche 1 bis 9, bei der das Meßinterferometer (2) ein Interferometer mit SAGNAC-Ring mit optischer Faser aufweist.

11. Interferometrische Meßvorrichtung (20) gemäß den Ansprüche 5 und 10, bei der die Länge der optischen Faser des Filterungsinterferometers (200) geringfügig größer, vorzugsweise zwischen 2% und 5% länger, als die Länge der optischen Faser des Interferometers mit SAGNAC-Ring ist.

**Claims**

1. An interferometric measurement device (10; 20) including:

   - a broad-spectrum spontaneous emission light source (1),
   - a measurement interferometer (2) comprising a modulator, and receiving, as an input, a light signal (2A) of input light power $P_{in}$ and delivering, as an output, a modulated light signal (2B) of output light power $P_{out}$, said modulated light signal (2B) being modulated at a modulation frequency $f_m$, depending on a physical parameter ($\Omega_R$) to be measured and being proportional to said input light power $P_{in}$, and
   - an optical radiation detector (3), receiving the modulated light signal (2B) exiting from said measurement interferometer (2) and delivering a modulated electrical signal (3A) proportional to said output light power $P_{out}$,

   said interferometric measurement device (10; 20) being **characterized in that** it includes a filtering interferometer (100; 200) insensitive to said physical parameter ($\Omega_R$) to be measured placed between said light source (1) and said measurement interferometer (2) or between said measurement interferometer (2) and said optical radiation detector (3), said filtering interferometer (100; 200) having a free spectral range ISL, expressed in frequency, and a finesse F selected so that a frequency interval (INT1, INT2, INT3), centred about an optimum frequency $f_{optim}$ equal to $(2k + 1)$ ISL/2, k being a natural number, and of width $\Delta f$ equal to $[0.9-(3/2F)]$ ISL, comprises the modulation frequency $f_m$ of the modulated light signal (2B) at the output of the measurement interferometer (2).

2. The interferometric measurement device (10; 20) according to claim 1, wherein said filtering interferometer (100; 200) is a two-wave interferometer.

3. The interferometric measurement device (10; 20) according to claim 1, wherein said filtering interferometer (100; 200) is a multiple-wave resonant interferometer.

4. The interferometric measurement device (20) according to one of claims 2 and 3, wherein said filtering interferometer (200) is configured in dual-passage mode.

5. The interferometric measurement device (10; 20) according to one of claims 1 to 4, wherein said filtering interferometer (100; 200) comprises a fiber-optic interferometer.

6. The interferometric measurement device (20) according to claim 5, wherein said fiber-optic filtering interferometer (200) comprises a polarization-maintaining optical fiber.

7. The interferometric measurement device (20) according to one of claims 1 to 6, wherein said filtering interferometer (200) comprises a ring resonator (101) and two optical couplers (203, 204) whose ratios T/C of transmission coefficient T to coupling coefficient C are comprised between 70/30 and 95/5.

8. The interferometric measurement device (20) according to claim 7, wherein the ring resonator (101) has a null surface.

9. The interferometric measurement device (20) according to one of claims 1 to 8, wherein, when said filtering interferometer (200) is placed between said light source (1) and said measurement interferometer (2), said interferometric measurement device (20) includes a doped-fiber optical amplifier (8) placed between said filtering interferometer (200) and said measurement interferometer (2).

10. The interferometric measurement device (10; 20) according to one of claims 1 to 9, wherein said measurement interferometer (2) comprises a fiber-optic $S_{AGNAC}$ ring interferometer,

11. The interferometric measurement device (20) according to claims 5 and 10, wherein the length of the optical fiber of the filtering interferometer (200) is slightly higher, preferably between 2 % and 5 % longer, than the length of the optical fiber of the $S_{AGNAC}$ ring interferometer.

## Fig.1

## Fig.2

## Fig.3

## Fig.4

Fig.5

Fig.6

Fig.7

Fig.8

Fig.9

# Fig.10

# Fig.11

**EP 2 936 057 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0911930 A

**Littérature non-brevet citée dans la description**

- **H. LEFÈVRE.** The Fiber-Optic Gyroscope. *Artech House,* 1993